# EUROPEAN PATENT SPECIFICATION

(11) **EP 2 194 101 B1**
(45) Date of publication and mention of the grant of the patent: **13.08.2014**
(21) Application number: 08833676.3
(22) Date of filing: 26.09.2008
(51) Int. Cl.: C08L 101/00, C08K 3/08, C08K 3/22, C08K 3/30, F16C 33/10, F16C 33/20

(54) **COMPOSITION FOR SLIDING MEMBER**
ZUSAMMENSETZUNG FÜR EIN GLEITELEMENT
COMPOSITION POUR ÉLÉMENT DE GLISSEMENT

(30) Priority: 27.09.2007 JP 2007252610
(43) Date of publication of application: 09.06.2010
(73) Proprietor: Taiho Kogyo Co., Ltd, Toyota-shi, Aichi 471-8502 (JP)
(72) Inventor: HAKAMATA, Mitsuaki, Toyota-shi Aichi 4718502 (JP)
(74) Representative: Grünecker, Kinkeldey, Stockmair & Schwanhäusser
(86) International application number: PCT/JP2008/067551
(87) International publication number: WO 2009/041653

(56) References cited:
- EP-A1- 0 984 182
- WO-A1-2004/106391
- DE-A1-102004 033 968
- DE-A1-102006 003 906
- DE-A1-102006 003 908
- JP-A- 8 092 487
- JP-A- 2000 169 738
- JP-A- 2004 277 610
- JP-A- 2006 116 458
- JP-A- 2006 312 688
- JP-A- 2008 063 488

## Description

The present invention relates to a composition for a sliding member. More specifically, the invention relates to a composition for the sliding member, which is applied to a surface of the sliding member and provides a lubricating film having good abrasion resistance. That is, when the lubricating film is formed on the surface of the sliding member, even if the formed lubricating film is pressed and slid, large cracks in the lubricating film are not formed and large peeling off of the lubricating film is restrained from occurring.

Compositions for sliding members for lubricating sliding member of machinery such as fluid machinery, for example, swash plate compressor, are known. These compositions for sliding members are coated on the surface of each sliding members, such as a piston or a bearing, and function as lubricating films. Accordingly, these compositions for sliding members are required that the lubricating films have low friction coefficient and excellent abrasion resistance without being abraded by long-term use, and good conformability with a counterpart member.

As such compositions for sliding members, compositions containing solid lubricant in base resin, or compositions containing hard fine particles having a particle size in the order of µm in base resin are known. For example, patent document 1 discloses that a composition for a sliding member includes 70 to 97 mass% of solid lubricant selected from molybdenum disulfide, tungsten disulfide, boron nitride, graphite and carbon fibers, and 3 to 30 mass% of the base resin. The base resin includes resin selected from a polyimide-based resin, an epoxy resin and a phenol resin, and a film-forming assistant agent.

Also, patent document 2 discloses a base resin of a composition for a sliding member selected from polyamideimide, polyimide-based and epoxy-based resin. Further, the base resin contains a solid lubricant including 10 to 40 vol% of molybdenum disulfide, 10 to 40 vol% of flake graphite or vein graphite, and 10 to 40 vol% of polytetrafluoroethylene. Furthermore, a sum total of the solid lubricant is from 30 to 60 vol%, and the remainder is substantially the base resin.

Still further, patent document 2 discloses a composition for a sliding member including the base resin containing hard fine particles having the particle size of 0.01 to 3 µm. The fine particles are such as zinc sulfide, alumina, silica, silicon carbide, silicon nitride, or etc.
Patent Document 1: Japanese Patent Unexamined Publication No. JP-A-7-247493
Patent Document 2: Japanese Patent Unexamined Publication No. JP-A-2005-089514

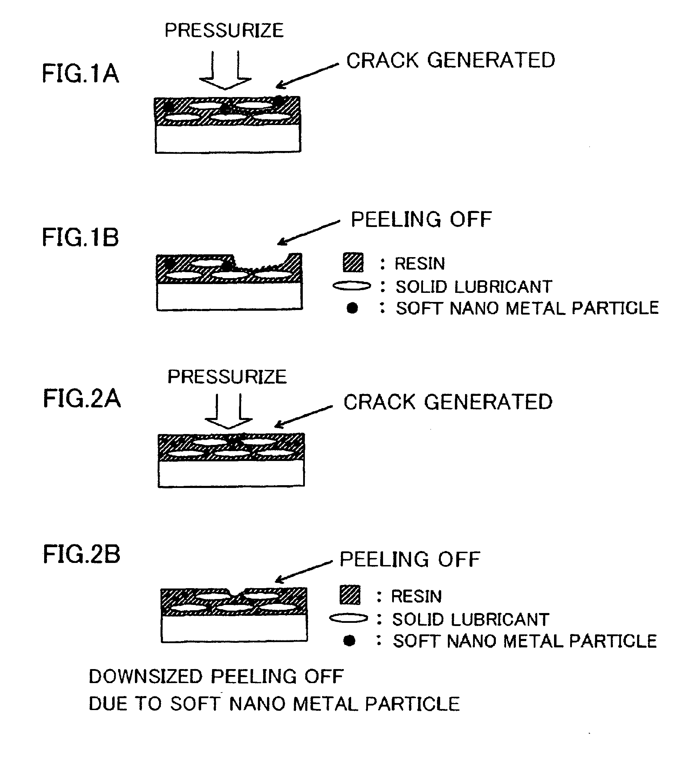

However, as shown in Fig. 1, in above described composition for the sliding member are used as a lubricating film, large cracks are occurred in the formed lubricating film when pressed and slid, and are sometimes detached with additive agents such as solid lubricant and hard particles. Then, further peeling off and abrasion of a sliding faces are caused from the thus formed peeling off trace. That is, the peeling off trace becomes origin of further peeling off. Additionally, secondary damage may be caused because the detached large pieces stick to the counterpart member, and then the surface of the counterpart member becomes coarse. For all of above reason, the abrasion of the sliding surface is prompted.

WO 2004/106391 A1 discloses a composition comprising a polymer matrix containing a fluorinated polymer, and nano-sized metal oxide particles which are homogeneously dispersed in said polymer matrix. The metal oxide particles may be particles of SiO₂, TiO₂, ZrO₂, ZnO₂. Alternatively, SiO₂ particles coated with TiO₂, ZrO₂, ZnO₂, SnO₂ or Al₂O₃ may be used.

DE 10 2004 033968 A1 discloses a coating composition for a sliding member, said composition comprising a base resin. The composition may further contain nano particles, which are preferably metallic particles or ceramic particles (oxides, nitrides, borides), and a solid lubricant such as graphite, MoS₂, WS₂, BN, or PTFE.

An object of the invention is to provide a composition for a sliding member which provides a lubricating film having good abrasion resistance. That is, even if the formed lubricating film is pressed and slid, large cracks in the lubricating film are not formed and large peeling off of the lubricating film is restrained from occurring.

As a result of experiments for achieving the above object, as for a composition for a sliding member, the present inventor has found that by bringing specific nano metal particles softer than a counterpart material in a base resin, a generation of cracks can be guided around the nano particles. Thereby, even if the formed lubricating film is pressed and slid, a generation of large cracks and a generation of large peeling off in the lubricating film are prevented. Thus, the invention has been accomplished.

That is, for attaining the above mentioned object, according to the present invention, there are provided following aspects.
(1) A composition for a sliding member comprising:
   a base resin; and
   nano metal particles being CuO particles,
   wherein the nano metal particles are softer than a counterpart member to be slidon the sliding member, and
   wherein the content of the soft nano metal particles is 5 vol% or less.
(2) The composition of item (1), wherein the average particle size of the soft nano metal particles is from 0.1 to 100 nm.
(3) The composition of item (1) or (2) further comprising a solid lubricant wherein the content of the solid lubricant is from 20 to 80 vol%.
(4) The composition of item (3), wherein the content of the solid lubricant is from 20 to 70 vol%.
(5) The composition of item (4), wherein the content of the solid lubricant is from 20 to 50 vol%.
(6) A sliding member comprising a base member coated with the composition of any one of items (1) to (5).

When the composition for the sliding member of the invention is applied and coated on a surface of the sliding member to form the lubricating film, the invention provides the lubricating film having good abrasion resistance.

Because generation of cracks is guided around the nano particles due to the contained soft nano metal particles, even if the formed lubricating film is pressed and slid, generation of large cracks and a generation of large peeling off in the lubricating film are restrained from occurring. As shown in Fig. 2, in the lubricating film formed of the composition for the sliding member of the invention, even if peeling off occurs, the peeling off is minute due to the contained soft nano metal particles. Therefore, large peeling off is restrained from occurring, so that secondary damage of sticking of large pieces to the counterpart member is not caused.

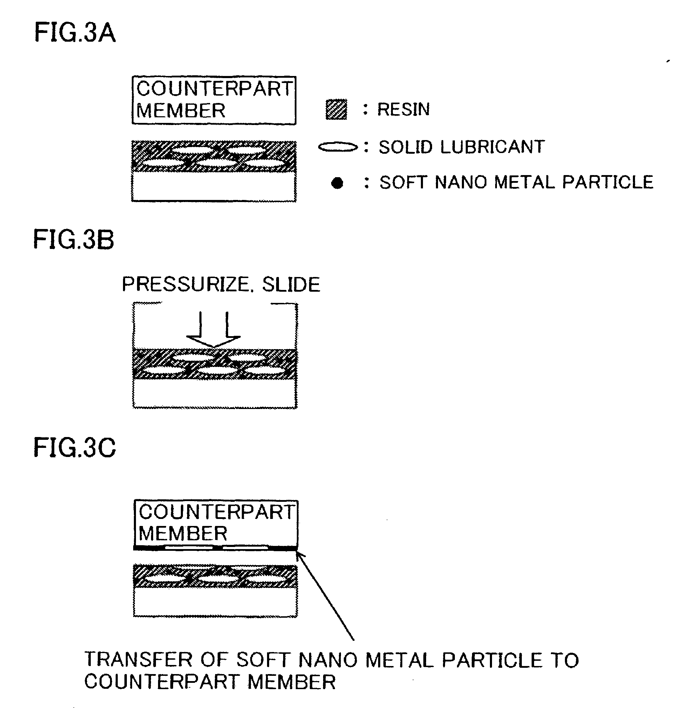

Further, as shown in Fig. 3, in the lubricating film formed of the composition for the sliding member of the invention, it is considered that when the contained soft nano metal particles are exposed to the surface, the soft nano metal particles are crushed by sliding with the counterpart member. Furthermore, the soft nano metal particles are beaten out and transferred to the counterpart member so as to form a thin film. This film is presumably superior in a sliding property, and so the sliding property is much more improved.
Fig. 1 shows mechanism of peeling off and abrasion of a lubricating film formed of a conventional composition for a sliding member.
Fig. 2 shows mechanism of peeling off and abrasion of a lubricating film formed of a composition for a sliding member of the invention.
Fig. 3 shows the mechanism of transfer of soft nano metal particles from the lubricating film formed of the composition for the sliding member of the invention to the counterpart member.
Fig. 4 shows a rotational vibration tester used in examples.

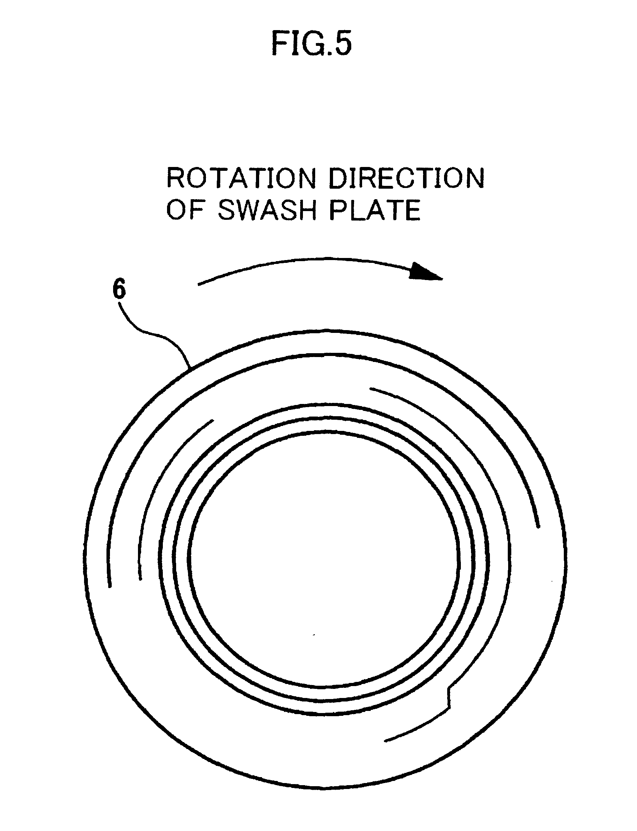

Fig. 5 is a front view of the rotational vibration tester used in the examples with Rr face of a swash plate being the front.

- 1:: Rotational vibration tester
- 2:: Motor
- 3:: Piston
- 4:: Shoe
- 5:: Cylinder
- 6:: Swash plate
- 7:: Oil mist injection nozzle

As base resins for use in a composition for a sliding member of the invention, various kinds of resins used as the base resins of the composition for the sliding member can be arbitrarily used, however, resins having excellent heat resistance such as polyimide resins, e.g., polyamideimide and polyimide, epoxy resins and phenol resins can be preferably used. Resins having tensile strength of 150 MPa or more and elongation of 40% or more are especially preferable to use.

The composition for the sliding member of the invention contains soft nano metal particles. Here, soft metal means a metal softer than the counterpart member of sliding. As the soft nano metal particles, nano particles of CuO are used in the invention. The shapes of the soft nano metal particles to be used are not restricted and spherical, massive and flat shapes can be used, however, in the viewpoint of sliding property, in particular, attacking property of counterpart member, spherical particles are preferred. The average particle size of the soft nano metal particles is preferably from 0.1 to 100 nm, and more preferably from 0.1 to 40 nm. The average particle size of 0.1 to 100 nm is preferred in the view of peeling off resistance of the lubricating film and transfer of the nano metal particles.

For obtaining these nano particles, for example, a following method, what it called a PVS method, is exemplified. Initially, thermal energy is imparted on the raw material, so that gasified metal atom is generated. Subsequently, the gasified metal atom contacts with reaction gas such as oxygen or the like so as to obtain molecules and clusters of a metal oxide. Then, the metal oxide is instantly cooled and the above nano particles are obtained.

The content of soft nano metal particles in the composition for the sliding member of the invention is more than 0 vol% and 5 vol% or less, and preferably 1 vol% or less. When the content exceeds 5 vol%, the nano metal particles are agglomerated, and there is a risk that a sliding property peculiar to nano metal particles may lose.

In the composition for the sliding member of the invention, if necessary, solid lubricants similar to those used in conventional compositions for the sliding member, e.g., polytetrafluoroethylene, molybdenum disulfide, tungsten disulfide, boron nitride, graphite, carbon fibers, etc., can be contained in the base resin. Solid lubricants may be used by only one kind, or two or more may be used in combination. The average particle size of solid lubricants is generally preferably from 0.5 to 30 µm. By the use of solid lubricants, the sliding property is improved. When using solid lubricants, the content of the solid lubricants is preferable from 20 to 80 vol%, more preferable from 20 to 70 vol%, and furthermore preferable from 20 to 50 vol%. When the content is more than 80 vol%, it is difficult to form the lubricating film. While when the content is less than 20 vol%, the sliding property lowers a little.

The composition for the sliding member of the invention can be prepared according to ordinary methods. In general, the composition can be prepared by mixing a certain amount of each composition components such as base resin, soft nano metal particles, if necessary, a solid lubricant and so on, and an organic solvent by using a mixer, e.g., a Henschel mixer, a super mixer, a ball mill, a tumbler mixer, a bead mill, a kneader, etc. At this time, as the organic solvent, solvents which can dissolve the base resin are arbitrarily exemplified NMP, xylene, alcohol and the like. The kinds of solvents depend upon the kinds of base resins. The amount of the organic solvent can be arbitrarily set according to the desired viscosity of the obtained composition for the sliding member.

The lubricating film made of the composition for the sliding member of the invention on the surface of the sliding member can also be formed according to ordinary methods. In general, the composition for the sliding member is coated on a surface of the sliding member by a spraying method, a roll coat method, a dipping method, screen printing, pad printing, or the like, and then the coated layer is hardened by heating so as to form the lubricating film. At this time, the heating and hardening condition of the coated layer may be ordinary heating condition suited to materials to be used, although it depends upon the kind of the base resin.

The thickness of the lubricating film formed on the surface of the sliding member can be optionally set as necessary, however, generally from 5 to 50 µm is preferred.

The composition for the sliding member of the invention can be preferably widely applied to sliding parts of machinery such as fluid machinery, and especially preferably applied to sliding parts of sliding bearing such as the swash plate of the swash plate type compressor, half bearing, bush and washer or the like.

The invention will be specifically described with reference to examples and comparative examples.

### <Examples 1-1, 1-2 and Comparative Examples 1-1 to 1-4>

The following raw materials for the preparation of the composition for the sliding member were prepared.
[Base resin]
   - Polyimide resin (PI): "HCI-1200M", manufactured by Hitachi Chemical Co., Ltd.
[Solid lubricant]
   - Polytetrafluoroethylene (PTFE): manufactured by Kitamura Limited (average particle size: 3 µm)
   - Graphite (Gr): manufactured by Nippon Graphite Industries, Ltd. (average particle size: 1 µm)
[Soft nano metal particles]
   - Copper oxide (CuO): "Nano Teck Powder", manufactured by C.I. KASEI CO., LTD. (average particle size 30 nm, spherical shape)
   - Zinc oxide (ZnO): "Nano Teck Powder", manufactured by C.I. KASEI CO., LTD. (average particle size 30 nm, polyhedral shape)
[Hard fine particles used in conventional compositions for the sliding member]
   - Aluminum oxide (Al₂O₃): "Nano Teck Powder", manufactured by C.I. KASEI CO., LTD. (average particle size 30 µm, spherical shape)
   - Aluminum oxide (Al₂O₃): "Admafine", manufactured by Admatechs Co., Ltd. (average particle size: 1 µm, spherical shape)
   - Aluminum oxide (Al₂O₃) : "'Al₂O₃ reagent", manufactured by Merck KGaA (average particle size: 1 µm, massive shape)

The following organic solvent was used to mix the above raw materials.
- Organic solvent: NMP

In the above raw materials, 54.9 vol% of polyimide resin, 22.5 vol% of PTFE, and 22.5 vol% of graphite were mixed with the organic solvent to prepare a base coating agent, 0.1 vol% of each of particles shown in Table 1 below was added to the base coating agent, and mixed by using a bead mill to obtain liquid composition for the sliding member.

The obtained liquid composition for the sliding member coated on an iron-based base member by roll coating, and the film was heated at 300°C for 1 hour and hardened to obtain the lubricating film having a thickness of 15 µm.

The seizure pressure was measured on the formed lubricating film, and the appearance of the slid surface after measurement was observed. The results of tests are shown in Table 1 below.

### <The seizure pressure test>

Tester: Three pins/a disc type seizure pressure tester
Rotation number: 4,000 r/min
Lubricating condition: Mist lubrication
Counterpart shaft: SUJ2 (a shoe type)
Load condition: Gradual increase from preload of from 1 MPa to 3 MPa/15 minutes

**TABLE 1**

| | | Example 1-1 | Example 1-2 | Comparative Example 1-1 | Comparative Example 1-2 | Comparative Example 1-3 | Comparative Example 1-4 |
|---|---|---|---|---|---|---|---|
| Particles | Kind | CuO | ZnO | None | Al₂O₃ | Al₂O₃ | Al₂O₃ |
| | Average particle size | 30 nm | 30 nm | - | 30 nm | 1 µm | 1 µm |
| | Shape | Spherical | Polyhedral | - | Spherical | Spherical | Massive |
| Test results | Seizure pressure (MPa) | 13.5 | 12 | 10 | 13.5 | 10 | 8 |
| | Appearance after sliding | No peeling off. The base material was not exposed. | No peeling off. The base material was exposed by abrasion. | The film was peeled. | The film was peeled. Adhesion occurred. | The film was peeled. | The film was peeled. |

| | | | | | | | |
|---|---|---|---|---|---|---|---|
| Example 1-2 is not in accordance with the invention. | | | | | | | |

From the results in Table 1, samples containing nano particles are high in the seizure pressure, and it can be seen that the sliding surfaces of the samples containing soft and spherical nano particles are little damaged.

### <Examples 2-1, 2-2 and Comparative Examples 2-1 to 2-3>

The following raw materials were prepared for the composition for the sliding member.
[Base resin]
   · Polyamideimide resin (PAI): "HPC-6000", manufactured by Hitachi Chemical Co., Ltd.
   · Polyimide resin (PI): "HCI-1200M", manufactured by Hitachi Chemical Co., Ltd.
[Solid lubricant]
   - Polytetrafluoroethylene (PTFE): manufactured by Kitamura Limited (average particle size: 3 µm)
   - Graphite (Gr): manufactured by Nippon Graphite Industries, Ltd. (average particle size: 1 µm)
[Soft nano metal particles]
   - Copper oxide (CuO): "Nano Teck Powder", manufactured by C.I. KASEI CO., LTD. (average particle size 30 nm)
[Hard fine particles used in conventional compositions for the sliding member]
   - Titanium dioxide (TiO₂): "Nano Teck Powder", manufactured by C.I. KASEI CO., LTD. (average particle size 30 nm)

The following organic solvent was used to mix the above raw materials.
- Organic solvent: NMP

The above raw materials were mixed by using the bead mill in the ratio shown in Table 2 below to obtain the liquid composition for the sliding member.

The obtained liquid composition for the sliding member coated on an iron-based base member by roll coating, and the film was heated on the condition not exceeding the decomposition temperature of PTFE (320°C or lower), and hardened to obtain the lubricating film having a thickness of 15 µm.

Rotation vibration test and rotation load test of each of the formed lubricating films were carried out as follows. The results of the rotation vibration test and rotation load test are shown in Table 2 below.

### [Rotation vibration test]

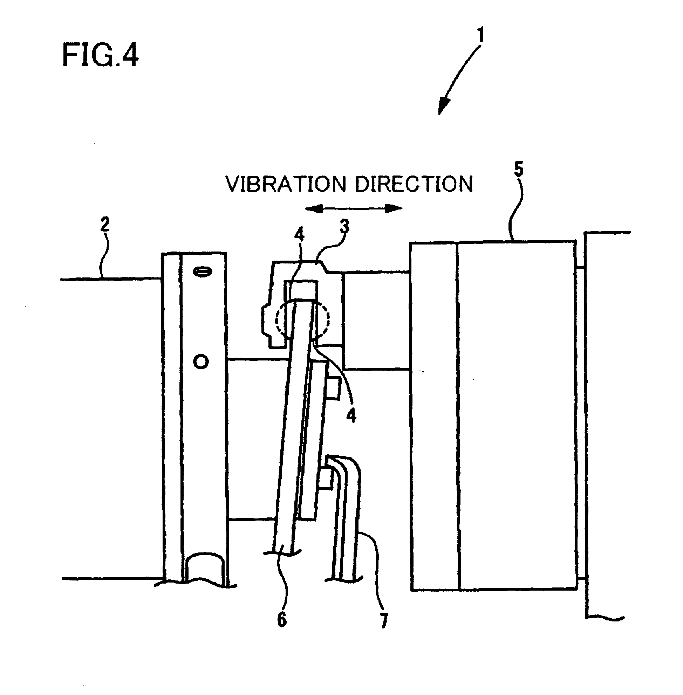

Rotation vibration test was carried out with rotation vibration tester 1 shown in Fig. 4 on the following condition. In the tester, piston 3 reciprocates from side to side by rotating the swash plate 6 installed at the motor shaft with an inclination by 5 degrees, as the side of motor 2 is front face (Fr face) and the side of cylinder 5 is rear face (Rr face) . Test condition: Rotation speed of the rotation vibration tester gradually increases from 1,000 r/min to 7,000 r/min at 1,000 r/min, and then the rotation speed of 7, 000 r/min was maintained. The load was 215 g. The test time was determined for 36 minutes including the time of gradual increase of the rotation speed. Lubricating condition: Paraffin oil was injected in an oil mist state by 1.1 g/min on the Fr face of the swash plate and 0.6 g/min on the Rr face.

### [Rotation load test]

Test condition: The rotation speed was fixed at 9,500 r/min. The load was gradually increased from 3.8 MPa to 12.6 MPa at 1.6 MPa/3 minutes, and then the load of 12.6 MPa was maintained. The test time was determined for 78 minutes including the time of gradual increase of the load.

Lubricating condition: A mixture of a coolant and refrigerating machine oil was supplied in a mist state.

### [Evaluation criteria of the both tests]

Rotation vibration: The one that ran at 7,000 r/min for 36 minutes including the time of gradual increase of the rotation number was graded as one having sufficient properties. Rotation load: The one that ran at 9,500 r/min, 12.6 MPa for 78 minutes including the time of gradual increase of the load was graded as one having sufficient properties.

**TABLE 2**

| | | Example 2-1 | Example 2-2 | Comparative Example 2-1 | Comparative Example 2-2 | Comparative Example 2-3 |
|---|---|---|---|---|---|---|
| Raw materials | PAI (vol%) | 54.9 | - | 54.9 | - | - |
| | PI (vol%) | - | 54.9 | - | 54.9 | 55 |
| | PTFE (vol%) | 25 | 22.5 | 25 | 22.5 | 22.5 |
| | Gr (vol%) | 20 | 22.5 | 20 | 22.5 | 22.5 |
| | CuO (vol%) | 0.1 | 0.1 | - | - | - |
| | TiO₂ (vol%) | - | - | 0.1 | 0.1 | - |
| Results of tests | Results of Rotation Vibration Test | Cleared the test for 36 minutes. | Seizure was occurred when 15 min 30 sec has passed. | Seizure was occurred when 9 min has passed. | Seizure was occurred when 11 min 50 sec has passed. | Cleared the test for 36 minutes. |
| | Results of Rotation Load Test | Cleared the test for 78 minutes. | Cleared the test for 78 minutes. | Seizure was occurred when 38 min has passed. | Cleared the test for 78 minutes. | Seizure was occurred when 15 min has passed. |

From the results in Table 2, it has been cleared that the compositions for the sliding member of the invention have excellent abrasion resistance.

When the composition for the sliding member of the invention is applied and coated on the surface of the sliding member to form the lubricating film, the invention provides the lubricating film having good abrasion resistance. That is, because generation of cracks is guided around the nano particles due to the contained soft nano metal particles, even if the formed lubricating film is pressed and slid, generation of large cracks and a generation of large peeling off in the lubricating film are prevented.

## Claims

1. A composition for a sliding member comprising:
a base resin; and
nano metal particles being CuO particles,
wherein the nano metal particles are softer than a counterpart member to be slid on the sliding member, and
wherein the content of the soft nano metal particles is 5 vol% or less.

2. The composition of claim 1, wherein the average particle size of the soft nano metal particles is from 0.1 to 100 nm.

3. The composition of claim 1 or 2 further comprising a solid lubricant, wherein the content of the solid lubricant is from 20 to 80 vol%.

4. The composition of claim 3, wherein the content of the solid lubricant is from 20 to 70 vol%.

5. The composition of claim 4, wherein the content of the solid lubricant is from 20 to 50 vol%.

6. A sliding member comprising a base member coated with the composition of any one of claims 1 to 5.

## Patentansprüche

1. Zusammensetzung für ein Gleitelement, umfassend:
ein Basisharz; und
Nanometallpartikel, welche CuO-Partikel sind,
wobei die Nanometallpartikel weicher sind als ein Gegenelement, welches auf dem Gleitelement gleiten soll, und
wobei der Anteil der weichen Nanometallpartikel 5 Vol.-% oder weniger beträgt.

2. Zusammensetzung nach Anspruch 1, wobei die mittlere Partikelgröße der weichen Nanometallpartikel von 0,1 bis 100 nm beträgt.

3. Zusammensetzung nach Anspruch 1 oder 2, des Weiteren umfassend einen Festschmierstoff, wobei der Anteil des Festschmierstoffes von 20 bis 80 Vol.-% beträgt.

4. Zusammensetzung nach Anspruch 3, wobei der Anteil des Festschmierstoffes von 20 bis 70 Vol.-% beträgt.

5. Zusammensetzung nach Anspruch 4, wobei der Anteil des Festschmierstoffes von 20 bis 50 Vol.-% beträgt.

6. Gleitelement umfassend ein Basiselement, welches mit der Zusammensetzung nach einem der Ansprüche 1 bis 5 beschichtet ist.

## Revendications

1. Composition pour un élément de glissement comprenant :
une résine de base ; et
des nanoparticules métalliques qui sont des particules de CuO,
où les nanoparticules métalliques sont plus tendres qu'un élément formant contrepartie destiné à glisser sur l'élément de glissement, et
où la teneur des nanoparticules métalliques tendres est 5 vol% ou moins.

2. Composition selon la revendication 1, où la taille de particule moyenne des nanoparticules métalliques tendres est de 0,1 à 100 nm.

3. Composition selon la revendication 1 ou 2 comprenant en outre un lubrifiant solide, où la teneur du lubrifiant solide est de 20 à 80 vol%.

4. Composition selon la revendication 3, où la teneur du lubrifiant solide est de 20 à 70 vol%.

5. Composition selon la revendication 4, où la teneur du lubrifiant solide est de 20 à 50 vol%.

6. Elément de glissement comprenant un élément de base revêtu de la composition selon l'une quelconque des revendications 1 à 5.
